# EUROPEAN PATENT APPLICATION

(11) **EP 1 589 451 A1**
(43) Date of publication of application: **26.10.2005**
(21) Application number: 04015116.9
(22) Date of filing: 28.06.2004
(51) Int. Cl.: G06F 17/60, G06F 17/30

(54) **A data processing method, system and computer program for providing a payment**

(30) Priority: 21.04.2004 EP 04009396
(71) Applicant: SAP AG, 69190 Walldorf (DE)
(72) Inventor: Enenkiel, Achim, Dr., 76139 Karlsruhe (DE)
(74) Representative: Richardt, Markus Albert

(57) **Abstract**

The present invention relates to a data processing method comprising:
- entering data values into respective data entry fields of an electronic data entry form (122) of a first computer (104),
- entering an identifier of a web service into the first computer,
- initiating a data processing step for providing a payment to be performed by a second computer (106) on the basis that the data values entered into the electronic data entry form by the first computer,
- sending signalling data (132) for signalling initiation of the data processing step to a web service(108), the signalling data comprising payment advice data,
- sending a result of the data processing step to a third computer (100), the third computer being coupled to the web service.

## Description

### Field of the invention.

The present invention relates in general to a data processing system and, in particular, to a system and a method for processing data in a Web Service environment.

### Background and prior art

Web services are an emerging technology that offers the dual promise of simplicity and pervasiveness. Web services represent the next level of function and efficiency in e-business. A Web service can be viewed as any mechanism by which an application or data processing service can be provided to other applications on the Internet.

Web services may be informational or transactional. That is, some services provide information of interest to the requestor while other services may actually lead to the invocation of business procedures. Examples of publicly available Web services today include stock quote services, services to retrieve news from Web news sources, and currency conversion services. For example, U.S. Pat. No. 6,604,135 discloses a method and system for location based web services.

For more detailed information on Web services technology reference is made to http://www.microsoft.com/germany/ms/msdnbiblio/show_all.asp?siteid=450884 http://www.w3.org/TR/wsdl.html, http://www.microsoft.com/germany/ms/msdnbiblio/show_all.asp?siteid=600570,http://n. ethz.ch/student/jodaniel/37-310/slides/UDDL_MarcoCicolini.ppt, http://n.ethz.ch/student/jodaniel/37-310/slides/UDDI_DominikKaspar.ppt, http://www.microsoft.com/germany/ms/msdnbiblio/show_all.asp?siteid=600156

One example of Web services are the services responsive to simple object access protocol (SOAP) messages. SOAP is an application invocation protocol that defies a protocol for exchanging information encoded as XML messages. Normally these services are described by WSDL (Web Service Description Language) notation stored in WSDL documents. A WSDL document can be stored in numerous ways such as in a file, in a DB2 XML registry / repository, or in a DB2 based UDDI registry, for example. UDDI (Universal Description, Discovery, Integration) is a protocol for describing Web services such that interested parties may easily discover them. Specifications for this registry and use of WSDL in the registry are available at http://www.uddi.org/ . Service providers may register their services in a UDDI, specifying technical information about how to invoke the service. Often a WSDL document is stored in a UDDI registry in order to define the messages a particular Web services accepts and generates.

The design of UDDI allows enterprises that own Web service enabled applications to publish data about themselves and their services. By providing this information, UDDI implements a simplified form of searching for those interested in locating a particular service in which to fulfil an application process. The conventional UDDI search is focussed on single search criteria such as business name, business location, business categories, business identifier, service type by name, and discovery URL (Uniform Resource Locator).

Various approaches for implementing Web services are known from the prior art, such as from US patent applications 20030093436A1, 20030055868A1, 20030055624A1, 20030018661, 20030110242, 20030163513A1, 20040064503A1, 20040045005A1, 20040003130A1, 20030187841A1.

It is a common disadvantage of prior art web services that they usually require more or less manual user interaction. Manual user interaction is tedious and error prone. Another disadvantage of manual interaction is that data which is already available in electronic form needs to be manually re-entered into the Web service. In particular, the level of manual interaction and monitoring required by state of the art Web services is costly in terms of the required human resources.

### Summary of the invention

The present invention provides for a data processing method for providing a payment using a web service. A first computer is used for entry of data values into respective data entry fields of an electronic data entry form. Further, an identifier of the web service such as the uniform resource locator (URL) of the web service is entered into the first computer. Next, the first computer initiates a data processing step for providing the payment that is to be performed by a second computer on the basis of the data values entered into the electronic data entry form. Alternatively the data processing step is not to be performed by the second computer but by the first computer or another component coupled to the first computer. The initiation and / or performance or completion of the data processing step is signalled to the web service by sending of corresponding signalling data. The signalling data has payment advice data of the payment. The web service is coupled to a third computer that receives a result of the data processing step from the second computer, e.g. in the form of an XML data stream.

The present invention is particularly advantageous as the third computer can be pre-warned regarding reception of the payment data resulting from the data processing step performed by the first or second computer. For example, the third computer can periodically query the web service for signalling data that has been received by the web service. Alternatively the web service implements a push service for pushing information to the third computer in response to receipt of the signalling data. The signalling data that the third computer receives from the web service can be used in various ways for control of the data processing performed by the third computer.

In accordance with a preferred embodiment of the invention the payment advice data contains the incoming payment details required for assigning and clearing the relevant open item. Typically payment advice data contains the payment amount, payment date, and other information about the payment. The payment advice data has advice data items that contain information on the paid items. They also contain information used for identification purposes such as document number, reference number, billing document number, customer reference number, and so on. The payment advice data can be used during payment clearing to search for and assign open items automatically.

In contrast to the prior art the invention avoids a need for transmission of payment advice notes from a payer to a payee by means of regular mail, e-mail or by fax. These conventional transmission methods have the disadvantage that the data contained on the payment advice notes needs to be manually re-entered into the payee's financial computer system. The present invention is particularly advantageous as such additional error prone and tedious manual interaction can be avoided.

It is also known from the prior art to transmit payment advice notes by means of an electronic message, such as EDIFACT. One of the problems associated with this is that the payer needs to know the exact address of the processing entity of the financial processing system of the payee which is to receive the payment advice note in order to enable automatic processing. The present invention is particularly advantageous as the payer computer system does need to be aware of the exact format used by that processing entity of the payee's financial computer processing system.

In accordance with a preferred embodiment of the invention payment advice data is not only received for incoming payments but also for outgoing payments. When a direct debiting procedure is used, the payment is initiated by the payee computer rather than by the payer computer. In this instance payment advice notes are provided from the payee computer to the payer computer.

The Web service can be an integral part of the third computer. In this instance the third computer has a web services interface for receiving signalling data in accordance with the HTTP request-response protocol and an internal interface to a data processing and /or control application for synchronous or asynchronous further processing of the signalling data. Alternatively the web service is implemented as an integral part of the first computer or the second computer. In this instance the first or the second computer has an internal interface for providing signalling data to the Web service and the third computer has an external interface for receiving the data from the Web service, e.g. in accordance with the HTTP request-response protocol.

Alternatively the web service is implemented on a separate web-server computer that is loosely or closely coupled to the first, second or third computer system. For example, the web service stores the signalling data that is addressed to the third computer in a data file. The resultant data file with the accumulated signalling data is forwarded from the web service to the third computer periodically, when the size of the file has reached a predetermined limit, or at scheduled time intervals.

Depending on the implementation the Web service can be operated by the initiator of the data processing step, e.g. the payer's computer, or by the executor of the data processing step, e.g. the bank's computer, or by the recipient of the result of the data processing step, e.g. the payee's computer. In any case, the signalling data is transmitted to the Web services for reference by the third computer.

In another embodiment the web service is implemented as a hub and collects signalling data for a plurality of third computer systems. In this instance it is advantageous to store the signalling data in a database of the web-server using a unique identifier of the third computer to which the signalling data is addressed as a database key. The database is queried periodically for new signalling data that has been received for a given third computer in order to forward the new signalling data to the third computer.

A preferred field of application of the present invention is financial transactions. For example, a customer receives an invoice from a service provider. The invoice can be received by the customer in paper form or in electronic form, such as in the form of an XML document. The payment data is manually or automatically entered into the customer's computer for initiation of the payment procedure. After completion of the data entry into the online payment transaction form the payment data is transmitted to a second computer for execution of the payment. For example the second computer is a computer of the customer's bank.

The result of the data processing step performed by the bank's computer, i.e. the execution of the payment, is transmitted as corresponding payment data to the third computer, i.e. a computer of the payee. When the payment procedure is initiated the customer's computer and / or the bank's computer sends signalling data comprising payment advice data to the web service that is coupled to the payee's computer. Alternatively the customer mails a paper form for ordering payment from his or her account to his or her bank. In this instance the payment order data is entered into the bank's computer that takes the role of the first computer.

For example, the planned execution date of the payment procedure is communicated to the web service in order to announce the pre-scheduled payment. This has the advantage that the payee's computer can receive an early warning regarding the scheduled payment procedure such that sending of an unnecessary payment reminder can be avoided. Another advantage is that the scheduled payment can be entered into the payee computer's financial planning system.

As a consequence the payee's computer is pre-warned that payment of an open invoice is imminent. This information can be used by the payee's computer to avoid sending unnecessary payment reminders, for the purpose of financial planning and / or other purposes.

In accordance with a preferred embodiment of the invention, the data values that are entered into the electronic data entry form provided by the first computer are received in electronic form, such as by means of an XML document. Further, the identifier of the web service is also received in electronic form by the first computer. In addition to the identification of the web service the XML document can also comprise the WSDL (web service description language) description of the identified web service. It is to be noted that WSDL and UDDI are as such known and standardised (http://www.microsoft.com/germany/ms/msdnbiblio/show_all.asp?siteid=450884 http://www.w3.org/TR/wsdl.html, http://www.microsoft.com/germany/ms/msdnbiblio/show_all.asp?siteid=600570, http://n.ethz.ch/student/jodaniel/37-310/slides/UDDI_MarcoCicolini.ppt, http://n.ethz.ch/student/jodaniel/37-310/slides/UDDI_DominikKaspar.ppt, http://www.microsoft.com/germany/ms/msdnbiblio/show_all.asp?siteid=600156)

In accordance with a further preferred embodiment of the invention the signalling data for signalling initiation of the data processing step is directly sent from the first computer to the web service. Alternatively the signalling data is sent from the second computer to the web service.

In accordance with a further preferred embodiment of the invention the signalling data comprises an identifier of the second computer. The signalling data is stored in the database provided by the web service using the identifier of the third computer as a key. The third computer can periodically query the web services database in order to check if signalling data has been received and stored in the database. This can be implemented both as a push or a pull service of the web service.

It is to be noted that a database is not necessary for most applications. Rather, the signalling data is stored in a data file by the Web-Service. The data file with the accumulated signalling data is transmitted e.g. after pre-scheduled time intervals to the third computer.

In accordance with a further preferred embodiment of the invention the signalling data comprises a time stamp that indicates the time when the data processing step for providing the payment has been initiated or performed. The time information can be used as an additional control parameter by the third computer.

In accordance with a further preferred embodiment of the invention a computer network, such as the internet, an intranet or an extranet, provides the communication means for operatively coupling the first, second and third computers as well as the web service to the third computer.

In accordance with a further preferred embodiment of the invention the XML document is received by the first computer from the third computer. The XML document comprises data values and mark-up data being descriptive of the assignment of the data values to respective data entry fields of an electronic data entry form and an identifier of a web service.

For example, XML document is received from a sender computer by the first computer, the XML document containing data values, mark up data being descriptive of the assignment of data values to data entry fields of an electronic data entry form and an identifier of a Web service. The data values are read by the first computer and they are entered into respective data entry fields of an electronic data entry form identified by the mark up data.

In accordance with a further preferred embodiment of the invention a data processing step is initialised on the basis of the data values entered into the electronic data entry form by the first computer and the data processing step is performed using a second computer. The reading of the data values and entering the data values into respective data entry fields of an electronic data entry form is performed as a result of a drag and drop action executed in a Graphical User Interface environment. Then, the result of the data processing step is sent to the third computer by the second computer, and the signalling data is sent by the first computer to the Web service.

In accordance with a further preferred embodiment of the invention XML document includes a control parameter utilized for execution of said data processing step and the identifier of the Web service is an Uniform Resource Locator (URL) wherein each signalling data further comprises at least one of the data values, a time stamp identifying a date and time when at least one of the data values is sent, and an identifier identifying the sender computer.

In accordance with a further preferred embodiment of the invention data processing includes an account payment procedure and the account payment procedure includes a rebate feature.

In accordance with a further preferred embodiment of the invention an invoice is received in an electronic form, such as by means of an XML document. The XML document contains data that specifies one or more payments to be provided from the payer to the payee. In addition the XML document can contain a link to a web service provided by the payee for collection of payment advice data. The payment procedure and the sending of the payment advice data is initiated by the user by performing a drag-and-drop operation on the XML document.

For example, the user selects the XML document and positions the XML document on an icon of the online banking software of his or hers first computer. This invokes the online banking software of the user's first computer. The online banking software automatically reads the data from the XML document that specifies the one or more payments to be provided to the payee as well as the link to the web service.

On this basis the online banking software generates an electronic payment order that is sent to the computer of the payers bank, i.e. the second computer. In addition the online banking software uses at least a sub-set of the data contained in the XML document and / or additional data as payment advice data and sends the payment advice data as signalling data to the Web service as identified by the link.

Alternatively or in addition the online banking software includes the link of the Web service in the payment order that is transmitted to the computer of the payer's bank such that the computer of the payer's bank can send the signalling data with the payment advice data to the web service provided by the payee.

### Brief description of the drawings

- Figure 1: illustrates data processing system for providing a payment in a Web-based service environment of the present invention,
- Figure 2: illustrates a more detailed embodiment of the data processing system of Fig. 1,
- Figure 3: is a flowchart of a process illustrating a method of the present invention,
- Figure 4: illustrates an alternative embodiment of a financial computer system for processing account information in a Web-based service environment of the present invention,
- Figure 5: illustrates a block diagram of a further preferred embodiment of a data processing system of the invention.

### Detailed description

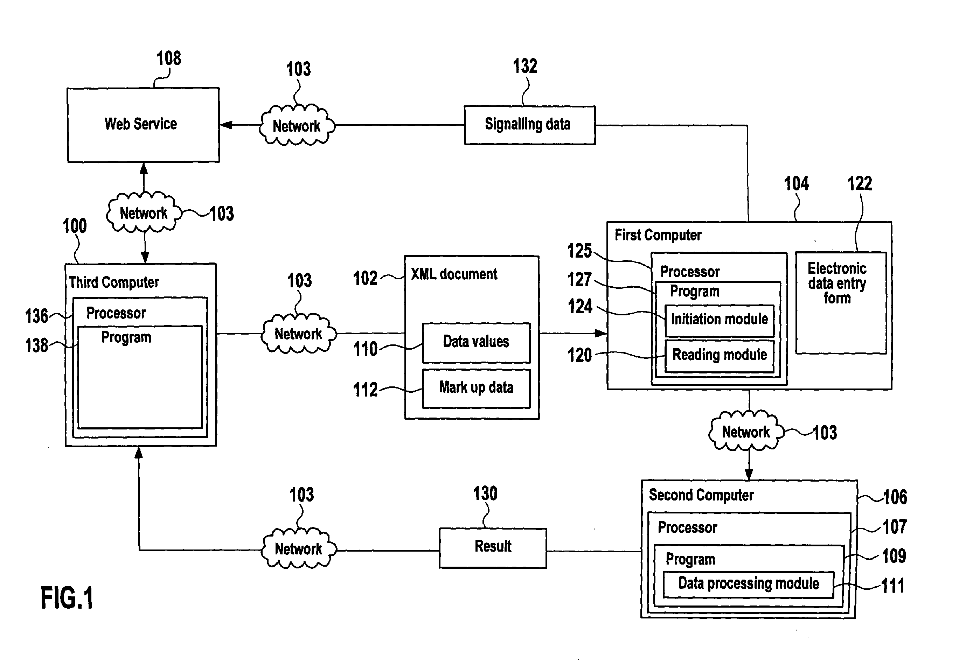

Figure 1 illustrates a data processing system for providing a payment from a payer to a payee. The payer has first computer 104 that is coupled to a second computer 106 via a network 103. The second computer 106 is the computer of the payer's bank in the example considered here.

The payee has third computer 100 that is closely or loosely coupled to the web service 108. In the preferred embodiment considered here the web service 108 is coupled to third computer 100 by means of network 103. Web service 108 serves for collecting signalling data 132 comprising payment advice data of payments that have been initiated from the first computer 104.

First computer 104 serves for entry of data specifying one or more payments to be provided from the payer to the payee. The data entry can be performed manually, automatically or semi-automatically. In the preferred embodiment considered here, first computer 104 can receive an XML document 102 that carries the data specifying the one or more payments to be provided from the payer to the payee.

The XML document 102 can be received on a data carrier, by email or by means of another transmission channel from the third computer 100 of the payee or another entity that is used by the payee for its billing procedure. In the example considered here the XML document 102 is transmitted from the payee's third computer 100 to the first computer 104 of the payer via network 103. The network 103 can be any communication or computer network, such as the internet.

The first computer 104 has a processor 125 and a program 127 which further comprises a reading module 120, and an initiation module 124. The reading module 120 serves to capture data values 110 included in the XML document 102 and to enter these data values into respective data entry fields of an electronic data entry form 122 identified by the mark up data 112. The initiation module 124 serves to invoke the second computer 106 in order to begin the data processing step.

The XML document 102 comprises a set of data values 110 specifying the payment to be provided to the payee and a mark up data 112 being descriptive of the assignment of data values to data entry fields of an electronic data entry form.

The second computer 106 has a processor 107 and a program 109. The program 107 has a data processing module 111 responsible for processing of the data values 110.

When the second computer completes the data processing step, it sends the result 130 of the data processing step to the third computer 100 over the network 103. Also, signalling data 132 is sent by the first computer 104 to the Web service 108. The signalling data 132 comprises the payment advice data of the initiated payment. For example, at least a sub-set of the data values 110 and / or other information is used as payment advice data that is transmitted as signalling data 132 to the web service. The other information contained in the payment advice data can be a time stamp indicating when the payment procedure has been initiated.

Alternatively the data processing step is not performed by the second computer but by the first computer.

In operation, the XML document 102 is received by the first computer 104 from the third computer 100. The processor 125 executes a program 127 which in turn starts the reading of data values 110 contained in the XML document 102. Then, the data values are entered automatically into respective data entry fields of an electronic data entry form 122 identified by the mark up data 112. The capture of data values into the data fields of the electronic data form is accomplished be the utilization of reading module 120 allowing automatic capture of data values into the plurality of fields of an electronic data entry form 122. Alternatively the data is entered manually.

Next, a program 127 having an initiation module 124 starts the data processing step by invoking the second computer 106. The second computer's processor 107 executes a program 109 having a data processing module 109 which on the basis of the data values entered into the electronic data entry form by the first computer performs the data processing step ending in a result 130 being sent to the third computer 100 over the network 103. The result 130 is the payment amount provided from the payer to the payee.

Simultaneously, the first computer sends the signalling data 132 to the Web service 108, where the signalling data is stored in the database of the Web service 108. The signalling data is then further utilised for the controlling of the processing of the result 130 by the third computer 100 where the processor 136 executes a program 138.

It is to be noted that the signalling data 132 can also be transmitted from the second computer 106 to web service 108 via network 103 . Further, it is to be noted that XML document 102 can be provided by a forth computer that is not shown in figure 1. In other words, the source of the XML document 102 and the receiver of result 130 do not need to be identical. In fact the third and forth computers can belong to different organisational entities.

Further, it is to be noted that it is not essential for the present invention that the data values 110 are received in an electronic form. The present invention is also applicable when the data values are received in paper form for manual entry into the electronic data entry form 122.

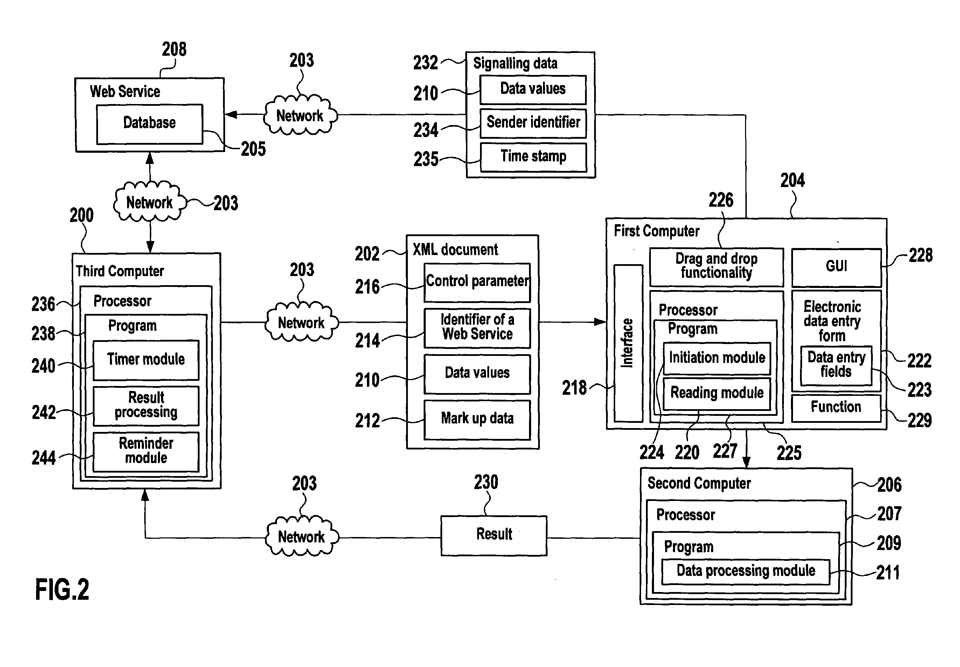

Figure 2 illustrates a more detailed system for providing a payment in the Web-based service environment of the present invention. The embodiment of Figure 2 constitutes a logical continuation of the Figure 1 where like elements are referenced by like reference numbers having added 100.

A third computer 200 having a processor 236, a program 238, and a plurality of modules 240 to 244 is disclosed. The third computer 200 transmits an XML document 202 to a first computer 204. The XML document comprises a control parameter 216, an identifier of the web service (URL) 214, a set of data values 210, and a mark up data 212.

Alternatively the document is received in ordinary paper form by a user of the first computer 204. In this case the user needs to scan the paper form or to manually enter the data values into the electronic form provided by the first computer 204.

The first computer 204 has a processor 225 and the program modules 227, 220 and 224. The program module 227 has a reading module 220 that captures the data values 210 and allows them to be entered into respective data entry fields including the compulsory fields of an electronic data entry form 222. The initiation module 224 serves to execute a data processing step on the basis of the data values 210 entered into the electronic data entry form 222 by the first computer 204. The initiation module 224 invokes a second computer 206 to start the data processing step.

The first computer 204 further comprises an interface 218 that is designed to recognise the format of the XML document 202. Program module 227 executes a function 229 that allows automatic filling out of the electronic data entry form 222 on the basis of the XML document's format. The automatic filling out of the form is performed when the user uses a drag and drop functionality 226 available in the graphical user interface environment 228.

The second computer 206 has a processor which serves to execute program modules 209 and 211. Program module 209 has a data processing module 211 that is responsible for the processing of the data values. The result of the data processing step is sent to a third computer 200 utilising a network 203. In the next step, the first computer 204 sends signalling data 232 to the web service 208 over the network 203.

The signalling data 232 comprises at least one of the data values 210, a time stamp 235, identifying a date and a time when at least one of the data values is sent, as well as identifier 234 for identification of a third computer 200. The Web service 208 comprises a database 205 for storage of signalling data 232.

In operation, utilising a network 203, the third computer 200 sends an XML document 202 to the first computer 204. The XML document comprising a plurality of data values 210, and a control parameter 216 utilised for execution of the data processing step, as well as identifier of a Web Service (URL) 214 and the mark up data 212 being descriptive of the assignment of data values to the data entry fields of an electronic data entry form is received by the first computer 204. The control parameter 216 specifies a rule that is executed by the first's computer program 227 in order to determine the amount of the result 230. The data values are captured into the respective data entry fields 223 of an electronic data entry form 222 utilizing a reading module 220.

Then, the initiation module 224 invokes the second computer 206 and thus begins the data processing step, whereby the user is able to control when the data values of the XML document are entered into the electronic data entry form by using drag and drop functionality 226. For example the XML document is moved onto an icon representing an accounts payable application software component, such as an online banking software, containing the program 227 using graphical user interface 228. As a consequence of this drag-and-drop operation performed by the user the initiation module 224 is activated.

The processor 207 of the second computer 206 completes processing of the data utilising a data processing module 211. The result is sent to the third computer 200 utilising the network 203. Simultaneously, the first computer sends the signalling data 232 to the Web service 208, where the signalling data containing data values 210, the sender identifier 234, and the time stamp 235 is stored in the database 205 of the web service 208. Also, the control parameter 216 is communicated to the Web Service by the signalling data 232.

The signalling data 232 stored in the database 205 of the web service is utilised for the controlling of the processing of the result 230. When the reminder module 244 determines that the result i.e. the payment, is overdue and that the reminder should be initiated it uses the signalling data 232 that has been received by web service 208 in order to find out if the result processing was initiated. If the result processing module 242 determines that signalling data 232 containing the respective payment advice data of the overdue payment has been received by web service 208 the reminder module invokes a timer module 240 which is set for the predetermined amount of time to allow for the processing. However, if the predetermined amount of time expires and the result 230 still does not arrive, in this case the reminder module 244 initiates sending a payment reminder.

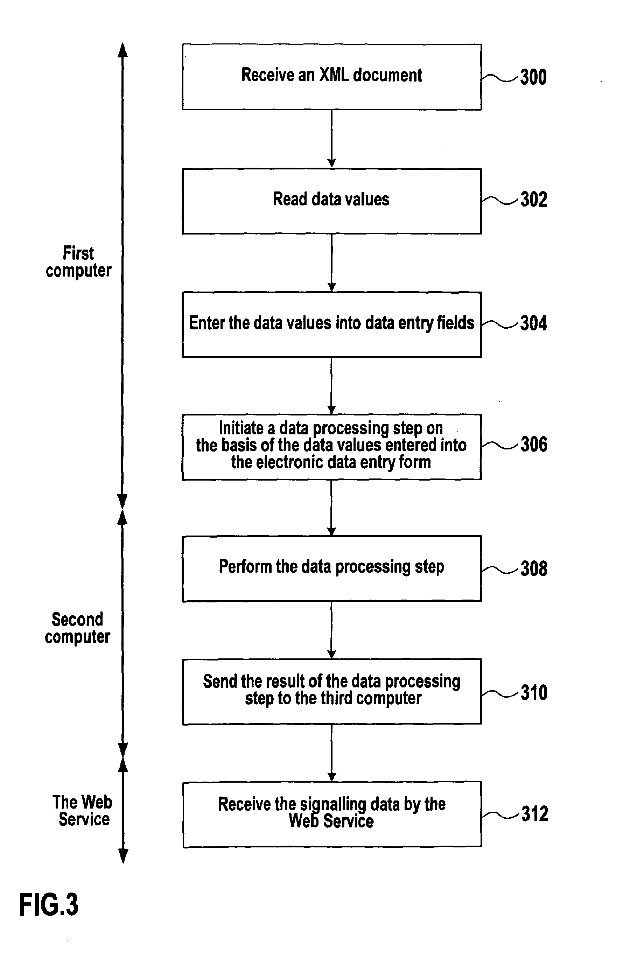

Figure 3 shows a corresponding flow chart. In step 300 an XML document is received from a sender computer by a first computer, the XML document containing data values, and mark up data being descriptive of the assignment of data values to data entry fields of an electronic data entry form and an identifier of a Web service. In the next step 302, the data values contained in the XML document are read by the reading module. In step 304 the data values are entered into respective data entry fields of an electronic data entry form identified by the mark up data by the first computer. In Step 306, a data processing step is initiated on the basis of the data values entered into the electronic data entry form by the first computer. In step 308, the data processing step is performed using a second computer.

Then, in the step 310, the result of the data processing step is sent to the sender computer by the second computer. In the last step 312, a signalling data is sent for signalling initiation of the data processing step by the first computer to the Web Service.

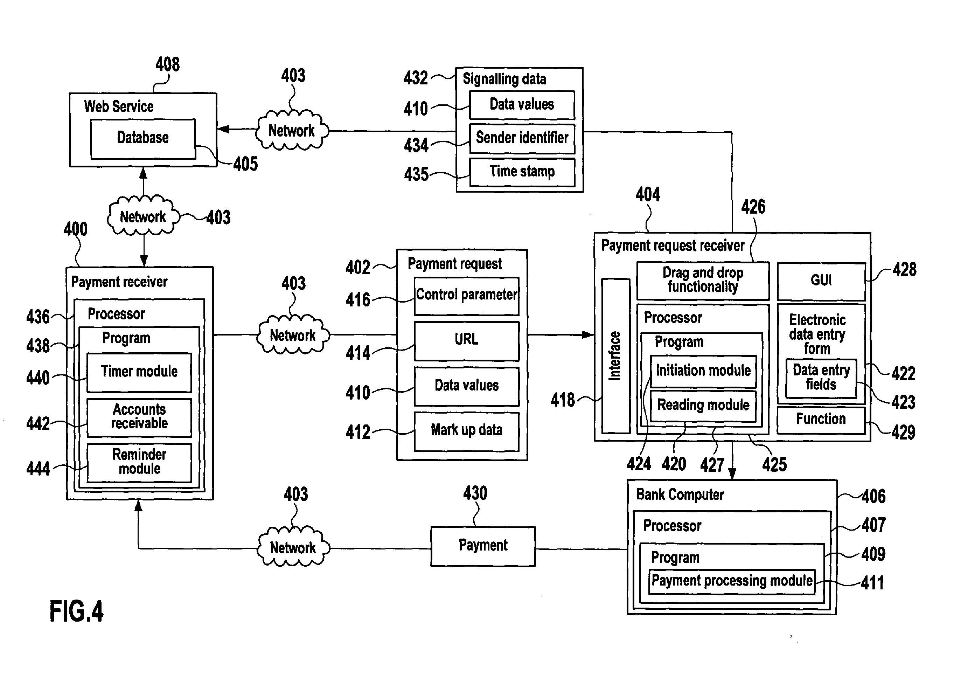

Figure 4 illustrates a more detailed embodiment of the data processing system of the present invention for use as a financial / banking online system. Elements of figure 4 that correspond to elements of figure 2 are designated by like reference numerals.

Payment receiver 400 has a processor 436, a program 438 which comprises timer module 440, accounts receivable module 442, and reminder module 444. Processor 436 serves to execute program modules 440, 442 and 444. Program module 438 has an account receivable module 442 for processing of payment 430. The payment receiver 400 sends payment request 402 utilising a network 403 to a payment request receiver 404. The payment request 402 comprises control parameter 416, an Uniform Resource Locator (URL) 414, data values 410, and mark up data 412. The mark up data 412 is being descriptive of the assignment of data values to their data entry fields of an electronic data entry form.

Alternatively payment request 402 is received in the form of a paper document. It is not essential that payment request 402 is received in electronic form.

According with this preferred embodiment, the first computer is in this case a payment request receiver 404 comprising an interface 418, a processor 425, a program 427, an initiation module 424, and a reading module 420. The payment request receiver 404 further comprises an electronic data entry form 422 with the plurality of data entry fields 423, a graphical user interface 428, a drag and drop functionality 426, and a function 429.

An interface 418 recognises the format of the payment request 402. The format contains such payment information as credit organisation, bank connection and the amount of the total payment. The processor 425 serves to execute the program modules 424 and 420. The initiation module 424 initiates a data processing step on the basis of the data values entered into the electronic data entry form 422 by the first computer, in this case a payment request receiver 404. The performance of the data processing step takes place using a second computer, in this preferred embodiment the second computer being a bank computer 406.

Program module 427 has a reading module 420 which serves to capture the data values and enter them into respective data entry fields of an electronic data entry form 422. The electronic data entry form has a plurality of data entry fields 423. Program module 427 serves also to execute the function 429 which allows, on the base of format, to automatically fill out an electronic data entry form 422. The reading of data values 410 and entering the data values into respective data entry fields 423 of an electronic data entry form 422 is performed in a response to drag and drop functionality 426 used in a graphical user interface environment 428.

Bank computer 406 has a processor 407 which serves to execute program modules 409 and 411. Program module 409 has a payment processing module 411 which performs an operation resulting in sending the payment 430 to the payment receiver 400. The payment request receiver 404 or the bank computer 406 sends the signalling data 432 to the Web service 408 utilising a network 403. Each signalling data 432 comprises e.g. at least one of the data values 410, a time stamp 435 identifying a date and/or a time when at least one of the data values is sent, and an identifier 434 identifying the payment receiver 400.

Signalling data 432 is stored in a database 405 of a web service 408 in order to be used for controlling of the processing of a payment 430.

In operation, payment receiver 400 sends payment request 402 to the payment request receiver 404 utilizing the network 403. When the payment request receiver 404 receives a payment request 402 comprising an URL; a control parameter 416, utilised for execution of payment processing step; and a mark up data 412 being descriptive of the assignment of data values to data entry fields 423, the reading of the data values 410 and entering of the data values 410 into respective data entry fields 423 takes place. The control parameter 416 provides a rule that is executed by the payment request receiver 404 in order to determine the payment amount. For example the rule allows a discount of 3 percent if the payment is performed within a week.

Next, the payment processing step is initiated on the basis of the data values entered with the help of initiation module 424 which invokes the bank computer 406 to start payment processing. The automatic filling out of electronic data entry form 422 takes place when the user using graphical user interface 428 drags and drops the icon of payment request 402 into the online banking software. The program 427 executes then the function 429 which allows on the base of the format of the payment request 402 to automatically fill out the electronic data entry form 422.

Subsequently, the processor 407 of the bank computer 406 executes the program 409 which has a payment processing module 411 that completes the payment processing step and sends the payment 430 to the payment receiver 400 utilising the network 403.

In the next step, the payment request receiver 404 sends signalling data comprising at least one of the data values 410, a time stamp 435 identifying a date and the time when at least one of the data values is sent to the database 405 of a web service 408 and a sender identifier 434 as payment advice data. The signalling data communicates also the control parameter 416 with the respective rules containing information about the rebate amount to the Web Service. Subsequently, the signalling data 432 is stored in a database 405, in order to be used for controlling of the processing of a payment by accounts receivable 442.

Alternatively to sending the signalling data after completion of the payment processing step, the signalling data is already sent when the order for performance of the payment processing step is generated or sent to the bank computer 406 by request receiver 404 or when the order is received by bank computer 406. In this instance it is preferred that the signalling data includes the date of the planned payment.

When the reminder module 444 determines that the payment 430 is overdue, instead of sending the reminder right away it attempts to find out if payment was initiated on the basis of the signalling data 432. For example, the reminder module 444 downloads the most up-to-date signalling date 432 from the web service 408. If accounts receivable module 442 determines that the downloaded signalling data contains the information that the payment 430 was initiated, the reminder module invokes a timer module 440 which is set for the predetermined amount of time to allow for the processing. However, if the predetermined amount of time expires and the payment still does not arrive, in this case the reminder module 444 initiates sending a reminder.

Utilizing the signalling data 432 which communicates also the control parameter 416 with the rules governing the payment amount allows the incorporation of a rebate feature in the account payment procedure allowing different amount of a discount, for example 3%, 5% or 10% based on the amount of time that passes until the actual payment 430 is received.

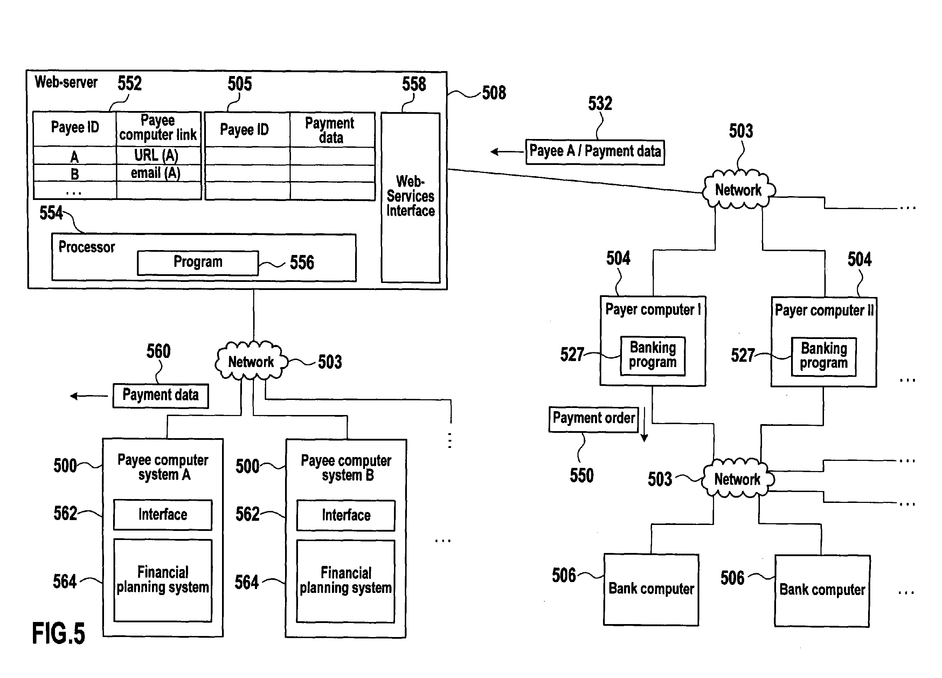

Figure 5 shows a block diagram of an alternative embodiment. Elements in the embodiment of figure 5 corresponding to elements of figures 1, 2, or 4 are designated by like reference numerals. The embodiment of figure 5 includes a plurality of first computers 504 that belong to respective payers I, II, ... Each one of the first computers 504 has a banking program 527 for entering a payment order 550. Likewise a plurality of bank computers 506 are coupled to the plurality of first computers 504 via internet 503.

The first computers 504 of the payers and / or the bank computers 506 can send signalling data 532 to web-server 508 via internet 503. The signalling data 532 includes at least an identifier of the payee that is to receive the payment and payment advice data, such as the amount of the payment and a pre-scheduled date when the payment procedure is to be executed and/or payment is expected to be received by the payee.

Web-server 508 has storage 505 for storage of the signalling data it has received for the various payees that are registered in table 552. Table 552 has an entry for each registered payee comprising the payee's identifier and address information regarding the payees computer, such as the payee's computer URL, email address or other link information for sending electronic data.

Web-server 508 has processor 554 for execution of computer program 556. Web services interface 558 of web-server 508 serves for communication in accordance with the HTTP request-response protocol via internet 503, in particular for receiving the signalling information 532.

A plurality of third computers 500 belonging to respective payees A, B... are coupled to web-server 508 via internet 503. Each of the third computers 500 has a web-interface 562 and a financial planning system 564.

In operation one of the payers enters a payment order into its computer system. Without restriction of generality payer I is considered in the following. In response to the payer's I entry of the payment data into banking program 527 payment order 550 is transmitted via internet 503 to payer's I bank's computer, i.e. one of the computers 506.

In addition, signalling data 532 is sent from payer's I computer 504 to web-server 508 via internet 503. Alternatively the bank computer 506 sends signalling data 532 after receipt of payment order 550. Signalling data 532 is received by web services interface 558 of web-server 508 and is entered into storage 505. Consecutively web-server 508 may receive a sequence of additional signalling data 532 from various computers 504 of other payers or from various other bank computers 506. The respective signalling data is collected in storage 505 of web-server 508 using the respective payee identifiers as a key.

The accumulated signalling data that is stored in storage 505 is transmitted to the respective payee computer systems 500 at periodic time intervals, each time new signalling data comes in, when the accumulated signalling data has reached a given size, at prescheduled points of time or using other trigger criteria.

For example program 556 processes each entry of table 552 by reading the respective accumulated payment data from storage 505 and sending the payment data as payment data 560 to the link given in table 552 for the respective payee via internet 503 to the respective payee's computer system 500. In the example considered here the payment data 560 of signalling data 532 is read from storage 505 and sent to the URL of payee computer system A 500 where it is received by interface 562. Payment data 560 is entered into financial planning system 564.

### List of Reference Numerals

- 100: Third computer
- 102: XML document
- 103: network
- 104: First computer
- 106: Second computer
- 108: Web Service
- 110: Data values
- 112: Mark up data
- 120: Reading module
- 124: Initiation module
- 125: processor
- 126: Drag and drop functionality
- 127: program
- 130: result
- 132: Signalling data
- 136: processor
- 138: program
- 200: Third computer
- 202: XML document
- 203: network
- 204: First computer
- 206: Second computer
- 207: processor
- 208: Web Service
- 209: program
- 210: Data values
- 211: Data processing module
- 212: Mark up data
- 214: Identifier of a Web Service
- 216: Control parameter
- 218: interface
- 220: Reading module
- 222: Electronic data entry form
- 224: Initiation module
- 225: processor
- 226: Drag and drop functionality
- 227: program
- 228: Graphical User Interface
- 230: result
- 232: Signalling data
- 234: Sender identifier
- 235: Time stamp
- 236: processor
- 238: program
- 240: Timer module
- 242: Result processing
- 244: Reminder module
- 400: Payment Receiver
- 402: Payment request
- 403: network
- 404: Payment request receiver
- 405: database
- 406: Bank computer
- 407: processor
- 408: Web Service
- 409: program
- 410: Data values
- 412: Mark up data
- 414: Uniform Resource Locator (URL)
- 416: control parameter
- 418: interface
- 420: Reading module
- 422: Electronic data entry form
- 424: Initiation module
- 425: processor
- 426: Drag and drop functionality
- 427: program
- 428: Graphical User Interface
- 430: result
- 432: Signalling data
- 434: Sender identifier
- 435: Time stamp
- 436: processor
- 438: program
- 440: Timer module
- 442: Accounts receivable
- 444: Reminder module
- 500: Payee computer system
- 503: Internet
- 504: Payer computer
- 506: Bank computer
- 508: Web-server
- 527: Banking program
- 532: Signalling data
- 550: Payment order
- 552: Table
- 554: Processor
- 556: Computer program
- 558: Web services interface
- 560: Payment data
- 562: Interface
- 564: Financial planning system.

## Claims

1. A data processing method comprising:
- entering data values into respective data entry fields of an electronic data entry form (122) of a first computer (104),
- entering an identifier of a web service into the first computer,
- initiating a data processing step for providing a payment on the basis of the data values entered into the electronic data entry form of the first computer,
- sending signalling data (132) for signalling scheduling, initiation, performance and/or completion of the data processing step to a web service(108), the signalling data comprising payment advice data,
- sending a result of the data processing step to a third computer (100), the third computer being coupled to the web service.

2. The method of claim 1, further comprising providing the signalling data from the web service to the third computer prior to receipt of the result by the third computer.

3. The data processing method of claim 1 or 2, further comprising receiving an XML document (102) by the first computer, the XML document carrying the data values and mark-up data being descriptive of the assignment of the data values to the data entry fields of the electronic data entry form and the identifier of the web service, and automatically entering the data values into the respective data entry fields and automatically entering the identifier of the web service.

4. The data processing method of claim 3, whereby the XML document is received from the third computer.

5. The data processing method of any one of the preceding claims, whereby the signalling data is sent from the first computer to the web service.

6. The data processing method of any one of the preceding claims, whereby the data processing step is to be performed by a second computer (106), and whereby the signalling data is sent from the first and/or the second computer to the web service.

7. The data processing method of any one of the preceding claims 2 to 6, the XML document containing a control parameter (216) for processing at least one of the data values by the first computer prior to entry into the electronic data entry form.

8. The data processing method of any one of the preceding claims, the payment advice data comprising incoming payment details for assigning the payment to an open item and clearing the open item by the third computer.

9. The data processing methods of claim 7 or 8, the control parameter specifying a price rebate and the signalling data comprising the control parameter.

10. The data processing method of any one of the preceding claims, wherein the identifier of the web service is a uniform resource locator (URL).

11. The data processing method of any one of the preceding claims, wherein the signalling data comprises at least one of the data values that has been entered into the electronic data entry form, a time stamp identifying a date and time when the data processing step has been scheduled, initiated and/or performed, and an identifier for identification of the third computer.

12. The data processing method of claim 11, the third computer using its identifier for querying the web service.

13. The data processing method of any one of the preceding claims, wherein the entry of the data values and the identifier of the web service is performed in response to a drag and drop operation.

14. A data processing system comprising:
- a first computer (104) for entering data values into respective data entry fields of an electronic data entry form (122) and for entering an identifier of a web service (108), the first computer comprising means (124) for initiation of a data processing step for providing a payment to be performed on the basis of the data values entered into the electronic data entry form,
- a second computer (106) for performing the data processing step and sending a result of the data processing step to a third computer (100),
- a web service (108) being coupled to the third computer, the web service being adapted to receive signalling data that signals scheduling, initiation and/or completion of the data processing step, the signalling data comprising payment advice data.

15. The data processing system of claim 14, the first computer being adapted to send the signalling data to the web service.

16. The data processing system of claim 14 or 15, the second computer being adapted to send the signalling data to the web service.

17. The data processing system of any one of claims 14, 15 or 16, the signalling data comprising at least one of the data values that has been entered into the electronic data entry form, a time stamp identifying a date and/or time when the data processing step has been scheduled, initiated and/or performed, and an identifier for identification of the third computer.

18. The data processing system of any one of claims 14 to 17, the web service comprising a database for storing the signalling data using the identifiers of the third computers as keys .

19. The data processing system of any one of the preceding claims 14 to 18, the web service implementing a push or a pull service for the third computer.

20. The data processing system of any one of the preceding claims 14 to 19, the payment advice data comprising incoming payment details, and the third computer having an accounts receivable application component for assigning the payment to an open item and clearing the open item.

21. A computer program product comprising computer executable instructions for performing the data processing method of any one of the preceding claims 1 to 13.

22. A data processing apparatus comprising:
- means for entering data values into respective data entry fields of an electronic data entry form (122),
- means (122) for entering an identifier of a web service,
- means (124) for initiating a data processing step for providing a payment on the basis of the data values entered into the electronic data entry form of the first computer,
- means (127) for sending signalling data (132) for signalling scheduling, initiation, performance or completion of the data processing step to a web service(108), the signalling data comprising payment advice data,
- means for sending payment data resulting from the data processing step to a third computer (100), the third computer being coupled to the web service and the third computer having an accounts receivable application component for assigning the incoming payment to an open item and clearing the open item using the signalling data received from the web service.
